Europäisches Patentamt

European Patent Office

Office européen des brevets

(11) Numéro de publication : **0 385 855 B1**

# FASCICULE DE BREVET EUROPEEN

(45) Date de publication du fascicule du brevet :
04.11.92 Bulletin 92/45

(51) Int. Cl.⁵ : **B60J 1/17**

(21) Numéro de dépôt : **90400545.1**

(22) Date de dépôt : **28.02.90**

(54) Coulisse de vitre pour porte de véhicule.

(30) Priorité : **01.03.89 FR 8902994**

(43) Date de publication de la demande :
**05.09.90 Bulletin 90/36**

(45) Mention de la délivrance du brevet :
**04.11.92 Bulletin 92/45**

(84) Etats contractants désignés :
**DE ES GB IT**

(56) Documents cités :
**US-A- 2 822 215**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Morin, Michel**
**35, rue de la Petite Fontaine Vauhallan**
**F-91430 Igny (FR)**

(74) Mandataire : **Boivin, Claude**
**9, rue Edouard-Charton**
**F-78000 Versailles (FR)**

EP 0 385 855 B1

## Description

Les vitres descendantes de porte de véhicule automobile peuvent être guidées dans le panneau de porte par une ou des coulisses verticales fixées à ce panneau.

Les coulisses de vitre pour porte de véhicule connues sont souvent constituées par des profilés en matière plastique rigide qui ont une section approximativement en U et dont les parois longitudinales présentent des bossages de guidage. Mais avec les coulisses de ce type jusqu'à présent réalisées, la vitre se déplace dans la coulisse avec un certain jeu de fonctionnement, ce qui provoque des bruits lors de la fermeture de la porte ou lors des secousses résultant de la route. En outre, lorsqu'on manoeuvre la vitre, celle-ci vient heurter des butées de maintien. Les coulisses jusqu'à présent réalisées sont fixées sur le panneau de porte avec des moyens de fixation dissymétriques nécessitant des coulisses différentes selon qu'elles sont montées sur une porte droite ou une porte gauche.

La présente invention a pour objet une coulisse qui ne présente pas ces inconvénients. Cette coulisse est caractérisée en ce que ses parois latérales comportent successivement et alternativement deux rampes inclinées en sens inverse en délimitant un bossage et des languettes élastiques qui présentent un bossage au voisinage de leur extrémité libre, un bossage de l'une des parois latérales étant légèrement décalé dans le sens de la longueur de la coulisse par rapport au bossage d'une languette élastique de l'autre paroi.

Dans un mode de réalisation particulier, la coulisse comporte à chacune de ses extrémités un étrier et une patte, les deux étriers et les deux pattes étant symétriques l'un de l'autre par rapport au plan médian transversal de la coulisse.

On a décrit ci-après, à titre d'exemple non limitatif, un mode de réalisation de la coulisse selon l'invention, avec référence aux dessins annexés dans lesquels :

La Figure 1 est une vue en élévation d'une vitre de véhicule guidée par la coulisse;

La Figure 2 est une vue en perspective de la coulisse;

La Figure 3 en est une vue en élévation;

La Figure 4 en est une coupe transversale suivant IV-IV de la Figure 3;

La Figure 5 est une vue en élévation, à plus grande échelle, d'une partie de la coulisse.

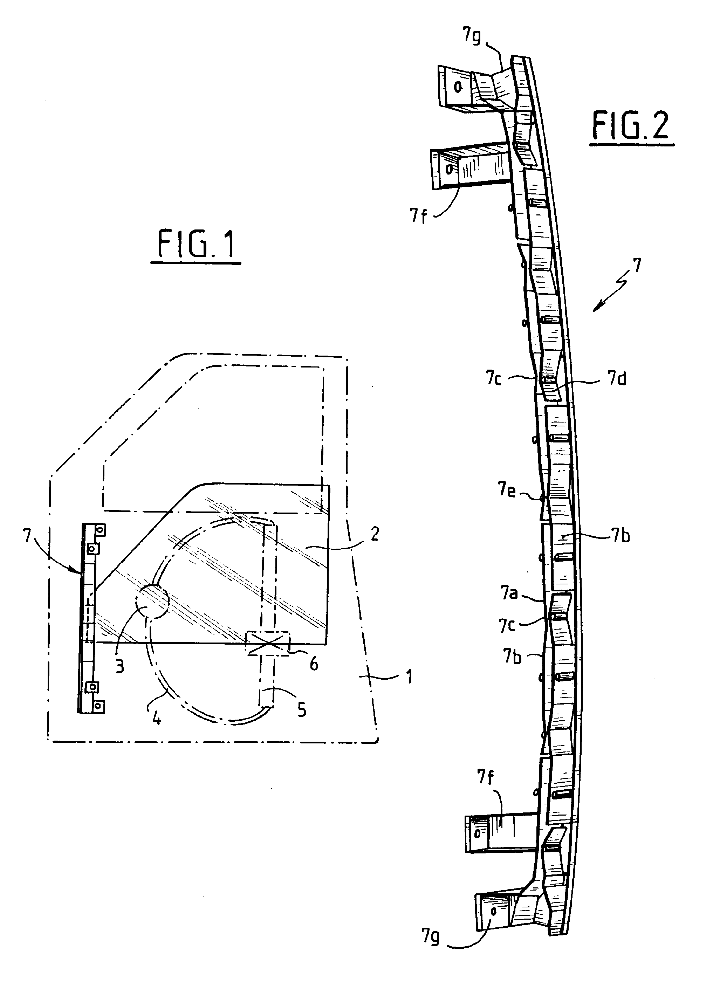

A la Figure 1 on voit une porte de véhicule automobile qui est équipée d'une vitre descendante 2. Celle-ci peut être déplacée par une manivelle ou un moteur électrique 3 porté par la porte entraînant un câble flexible 4 relié à un coulisseau 5 portant un support 6 fixé à la bordure inférieure de la vitre 2. A l'intérieur du panneau de porte 1, la vitre 2 est guidée par une coulisse qui est désignée au dessin, d'une façon générale, par la référence 7.

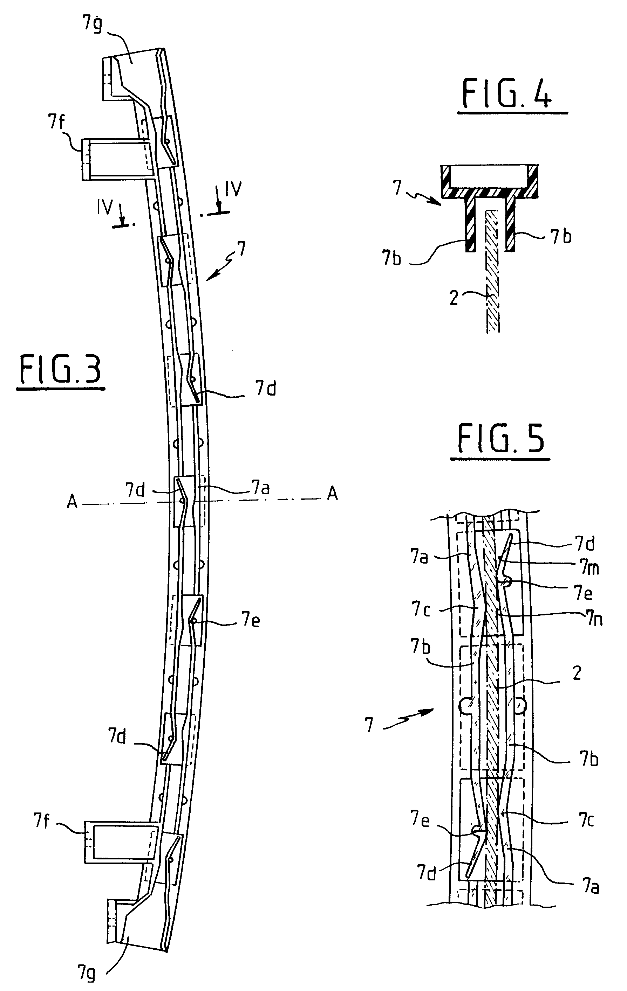

Comme on le voit plus particulièrement aux Figures 2 à 5, la coulisse 7 est constituée par un profilé en matière plastique qui a une section sensiblement en U.

Les deux parois latérales de ce profilé comportent successivement et alternativement des rampes 7a et 7b inclinées en sens inverse en délimitant un bossage 7c tourné vers l'intérieur de la coulisse et des languettes élastiques 7d qui comportent un bossage 7e tourné vers l'intérieur à une certaine distance de leur extrémité libre; ce bossage 7e est formé de deux rampes 7m et 7n inclinées en sens inverse. Chacun des bossages 7c de l'une des parois latérales se trouve presque en regard du bossage 7e d'une languette élastique 7d de l'autre paroi. Ce léger décalage longitudinal est nécessaire au centrage de la vitre et lui évité un pincement trop dur. Il évite en outre une fragilisation de la pièce au moulage.

A chacune de ses extrémités la coulisse 7 comporte un étrier 7f et une patte 7g servant à sa fixation sur la porte 1. Les deux étriers 7f sont symétriques l'un de l'autre par rapport au plan médian transversal A-A de la coulisse; il en est de même des pattes 7g.

Grâce à la disposition des étriers et des pattes, une coulisse peut être montée indifféremment sur une porte droite ou sur une porte gauche. Quand elle est en place elle maintient la vitre 2 en la pinçant, ce qui évite tout bruit aussi bien lors de la manoeuvre de cette vitre qu'au claquage de la porte.

## Revendications

1. Coulisse de vitre pour porte de véhicule constituée par un profilé en matière plastique rigide, qui a une section sensiblement en U et présente des bossages de guidage,
   caractérisée en ce que ses parois latérales comportent successivement et alternativement deux rampes (7a et 7b) inclinées en sens inverse en délimitant un bossage (7c) et des languettes élastiques (7d) qui présentent un bossage (7e) au voisinage de leur extrémité libre, un bossage (7c) de l'une des parois latérales étant légèrement décalé dans le sens de la longueur de la coulisse par rapport au bossage (7e) d'une languette élastique (7d) de l'autre paroi.

2. Coulisse selon la revendication 1,
   caractérisée en ce qu'un bossage (7e) des languettes élastiques (7d) est formé de deux rampes (7m et 7n) inclinées en sens inverse.

3. Coulisse selon la revendication 1 ou 2,
   caractérisée en ce que la coulisse comporte à chacune de ses extrémités un étrier (7f) et une patte (7g), les deux étriers et les deux pattes étant symétriques l'un de l'autre par rapport au plan médian transversal de la coulisse.

## Patentansprüche

1. Führung für Kurbelfenster in einer Kfz-Tür aus einem Profil aus starrem Kunststoff mit weitgehend U-förmigem Querschnitt, das Führungsbuckel aufweist,
dadurch gekennzeichnet, daß die beiden Seitenwände dieses Profils aufeinanderfolgende und wechselseitig angebrachte Rampen (7a und 7b) besitzen, die in Gegenrichtung schräg zueinander verlaufen und einen Buckel (7c) und elastische Lamellen (7d) mit einem Buckel (7e) in der Nähe ihres freien Endes besitzen, wobei jeder dieser Buckel (7c) auf einer der Seitenwände gegenüber einem Buckel (7e) auf der elastischen Lamelle (7d) der anderen Seitenwand jeweils leicht in Längsrichtung der Führung versetzt ist.

2. Führung nach Patentanspruch 1,
dadurch gekennzeichnet, daß ein Buckel (7e) der elastischen Lamellen (7d) aus jeweils zwei Rampen (7m und 7n) besteht, die in gegenüberliegender Richtung schräg zueinander verlaufen.

3. Führung nach Patentanspruch 1 oder 2,
dadurch gekennzeichnet, daß die Führung an jedem Ende einen Bügel (7f) und eine Klaue (7g) besitzt, wobei die beiden Bügel und Klauen gegenüber der mittleren Quereben der Führung symmetrisch zueinander liegen.

## Claims

1. Window pane groove for a motor vehicle door and constituted by a rigid plastic profile with an approximately U-shaped section and guiding bosses, wherein its lateral walls successively and alternately comprise two ramps (7a and 7b) slanted counterclockwise, thus delimiting a boss (7c) and elastic lugs (7d) which have a boss (7e) close to their free extremity, one boss (7c) of one of the lateral walls being slightly offset lengthwise from the groove with respect to the boss (7e) of one elastic lug (7d) of the other wall.

2. Groove according to claim 1, wherein one boss (7e) of the elastic lugs (7d) is formed of two ramps (7m and 7n) slanted counterclockwise.

3. Groove according to claim 1 or 2, wherein the groove comprises at each of its extremities a caliper (7f) and a bracket (7g), the two calipers and two brackets being symmetrical to each other with respect to the median transversal plane of the groove.

# FIG.1

# FIG.2

FIG.3

FIG.4

FIG.5